# EUROPÄISCHE PATENTSCHRIFT

(11) **EP 1 430 344 B1**
(45) Veröffentlichungstag und Bekanntmachung des Hinweises auf die Patenterteilung: **19.07.2017**
(21) Anmeldenummer: 02776945.4
(22) Anmeldetag: 28.08.2002
(51) Int. Cl.: G02B 6/38

(54) **STECKVERBINDER FÜR EIN KOMBINATIONSKABEL**
PLUG-IN CONNECTOR FOR A COMBINATION CABLE
CONNECTEUR ENFICHABLE POUR UN CABLE COMBINE

(30) Priorität: 03.09.2001 DE 10143058
(43) Veröffentlichungstag der Anmeldung: 23.06.2004
(73) Patentinhaber: joimax GmbH, 76227 Karlsruhe (DE); Blazejewski Medi-Tech GmbH, 76350 Sexau (DE)
(72) Erfinder: RIES, Wolfgang, 76344 Leopoldshafen (DE); BLAZEJEWSKI, Reinhold, 79350 Sexau (DE)
(74) Vertreter: Lichti - Patentanwälte Partnerschaft mbB
(86) Internationale Anmeldenummer: PCT/EP2002/009574
(87) Internationale Veröffentlichungsnummer: WO 2003/021308

(56) Entgegenhaltungen:
- EP-A- 0 029 555
- EP-A2- 0 216 470
- WO-A1-98/14111
- DE-A- 19 735 151
- DE-A1- 3 227 770
- DE-A1- 3 914 978
- DE-T- 69 315 357
- US-A- 4 140 367
- US-A- 5 847 759
- PATENT ABSTRACTS OF JAPAN vol. 010, no. 041 (P-429), 18. Februar 1986 (1986-02-18) -& JP 60 188912 A (NIPPON DENKI KK), 26. September 1985 (1985-09-26)
- PATENT ABSTRACTS OF JAPAN vol. 1999, no. 04, 30. April 1999 (1999-04-30) -& JP 11 014852 A (SHARP CORP), 22. Januar 1999 (1999-01-22)
- PATENT ABSTRACTS OF JAPAN vol. 1996, no. 09, 30. September 1996 (1996-09-30) -& JP 08 114719 A (SHARP CORP), 7. Mai 1996 (1996-05-07)
- PATENT ABSTRACTS OF JAPAN vol. 016, no. 292 (P-1377), 29. Juni 1992 (1992-06-29) -& JP 04 077706 A (HITACHI LTD), 11. März 1992 (1992-03-11)
- PATENT ABSTRACTS OF JAPAN vol. 1995, no. 04, 31. Mai 1995 (1995-05-31) -& JP 07 013043 A (MATSUSHITA ELECTRIC IND CO LTD), 17. Januar 1995 (1995-01-17)

## Beschreibung

Die vorliegende Erfindung betrifft ein Endoskopiesystem nach dem Oberbegriff des Anspruchs 1.

Ein Endoskopiesystem nach der EP 29 555 A2 mit einer optoelektronischen Kamera, beispielsweise einer CCD-Kamera, weist ein Kombinationskabel mit einem Lichtleiter und mehreren elektrischen Leitungen auf. Die elektrischen Leitungen in dem Kombinationskabel werden dazu verwendet, die optoelektronische Kamera mit einer Versorgungs- und Auswertevorrichtung zu verbinden, um zum einen der optoelektronische Kamera eine Versorgungsspannung zuzuführen und zum anderen von der Kamera erfasste Bilddaten an die Versorgungs-und Auswertevorrichtung zu übertragen, wo sie ausgewertet werden. Der Lichtleiter in dem Kombinationskabel dient dazu, Licht einer in der Versorgungs- und Auswertevorrichtung angeordneten Lichtquelle in den Bereich der optoelektronischen Kamera zu übertragen, um wenigstens einen Teil des Sichtbereichs der optoelektronischen Kamera mit Licht der Lichtquelle zu beleuchten. Bei Endoskopiesystemen muss dabei das aus dem Lichtleiter austretende Licht nicht unbedingt unmittelbar auf den zu beleuchtenden Bereich fallen, sondern es kann möglicherweise erst durch Umlenkung mittels eines weiteren Lichtleiters oder anderer optischer Einrichtungen auf diesen Bereich geführt werden. Die Kombinationskabel werden mit der Versorgungs- und Auswertevorrichtung über Steckverbindungen mit Stecker und Steckbuchsen verbunden. Nachteilig bei der bekannten Vorrichtung ist insbesondere die *wegen des* flach an der Steckerbuchse anliegenden Steckerkopfes durch die funktionellen Steckkontakte erfolgende mechanische Verbindung, was die *Steckkontakte* wiederum in ihrer elektrischen bzw. optischen Funktion beeinträchtigt.

Es ist Aufgabe der vorliegenden Erfindung ein Endoskopiesystem mit einer zuverlässigen lösbaren Verbindung zu schaffen.

Die Aufgabe wird gelöst durch ein Endoskopiesystem mit den Merkmalen des Anspruchs 1.

Ein erfindungsgemäßes Endoskopiesystem hat einen Steckverbinder für ein Kombinationskabel der oben genannten Art und weist einen Grundkörper, der in einer Steckrichtung in eine Buchse einführbar und mittels dessen der Steckverbinder in der Buchse haltbar ist, eine Lichtleiterhalterung, die einen beidseitig offenen Kanal zur Aufnahme des Lichtleiters aufweist, und wenigstens zwei mit jeweils einer der elektrischen Leitungen verbindbare Kontaktelemente auf.

Durch diese Ausbildung kann gleichzeitig eine Verbindung für den Lichtleiter und die elektrischen Leitungen hergestellt werden.

Das Kombinationskabel des Endoskopiesystems weist mindestens einen Lichtleiter und wenigstens zwei elektrische Leitungen auf. Ein Ende des Kombinationskabels ist mit dem erfindungsgemäßen Steckverbinder verbunden, wobei elektrische Leitungen des Kombinationskabels mit Kontaktelementen des Steckverbinders leitend verbunden sind. Der Lichtleiter ist in dem Kanal der Lichtleiterhalterung so angeordnet, dass er in Steckrichtung aus dem Grundkörper hervorsteht. Dies wird durch den erfindungsgemäßen Kanal in der Lichtleiterhalterung des Steckverbinders ermöglicht.

Der Lichtleiter kann dabei nur ein einzelnes Monofilament oder auch ein Bündel von Lichtleitfasern umfassen.

Die Steckbuchse weist einen Buchsengrundkörper zur Aufnahme des erfindungsgemäßen Steckverbinders und einen durch die Steckbuchse hindurchführenden Buchsenkanal zur Aufnahme eines Abschnitts eines in den erfindungsgemäßen Steckverbinder eingeführten Lichtleiters, wenn der Steckverbinder in die Steckbuchse eingesteckt ist, und mit elektrischen Leitungen verbindbare Kontaktelemente zur Kontaktierung der Kontaktelemente des erfindungsgemäßen Steckverbinders auf.

Die Erfindung schafft ein Endoskopiesystem mit einer zuverlässigen, einfachen lösbaren Verbindung sowohl für den Lichtleiter als auch die elektrischen Leitungen. Dabei kann insbesondere Licht einer Lichtquelle direkt in den Lichtleiter des Kombinationskabels eingekoppelt werden, indem der Steckverbinder mit dem Kombinationskabel in die erfindungsgemäße Steckbuchse eingesteckt wird, wobei sich der Lichtleiter durch den Kanal der Lichtleiterhalterung hindurch erstreckt und der in Steckrichtung aus dem Grundkörper hervorstehende Abschnitt des Lichtleiters. Durch den Buchsenkanal unmittelbar bis in den Bereich einer Lichtquelle geführt werden kann, so dass zur Einkoppelung des Lichts keine weitere Verbindung zwischen zwei Lichtleitern notwendig ist und durch eine solchen Verbindung bedingte Intensitätsverluste vermieden werden können.

Die Kontaktelemente bei dem Steckverbinder sind auf zumindest einem koaxial zu der Lichtleiterhalterung verlaufenden Kreis angeordnet. Dementsprechend sind die Kontaktelemente in der Steckbuchse ebenfalls auf zumindest einem koaxial zu der Lichtleiterhalterung verlaufenden Kreis angeordnet. Diese symmetrische Anordnung erleichtert es, den Steckverbinder ohne starkes Verkanten in die Steckbuchse zu drücken. Dadurch kann ein aus dem Grundkörper des Steckverbinders hervorstehender Lichtleiter bei Einführen in den Buchsenkanal weniger leicht durch Verkanten verformt und gegebenenfalls beschädigt werden.

Besonders bevorzugt können hierzu die Kontaktelemente in gleichen Winkelabständen voneinander angeordnet sein.

Bei den Kontaktelementen des Steckverbinders kann es sich um Kontaktstifte handeln, wobei die Kontaktelemente der Steckbuchse als Kontaktfedern ausgebildet sind. Die Kontaktstifte können jedoch auch in der Steckbuchse angeordnet sein, so dass die Kontaktelemente in dem Steckverbinder durch Kontaktfedern gegeben sind.

Ein in Steckrichtung offener Abschnitt des Grundkörpers des Steckverbinders ist hülsenförmig ausgebildet, wobei die Kontaktelemente innerhalb des Hülsenabschnitts des Grundkörpers angeordnet sind. Hierdurch wird, insbesondere bei Ausbildung der Kontaktelemente als Kontaktstifte, ein Schutz der Kontaktelemente zum einen gegen mechanische Beschädigungen und zum anderen auch gegen unbeabsichtigte Kontaktierung mit beispielsweise statisch aufgeladenen Gegenständen vermieden. Darüber hinaus kann eine Kontaktierung zwischen den Kontaktelementen des Steckverbinders und der Steckbuchse bei geeigneter Tiefe der Hülse erst dann erfolgen, wenn eine Führung des Grundkörpers durch den Buchsengrundkörper gegeben ist, so dass ein die Kontaktelemente beschädigendes Verkanten des Steckverbinders in der Steckbuchse vermieden wird.

Um eine Lichtquelle, deren Licht in den Lichtleiter des Kombinationskabels eingekoppelt werden soll, auch in größerem Abstand von der Steckbuchse anordnen zu können, ist der aus dem Grundkörper hervorstehende Abschnitt so ausgebildet, dass das Ende des Lichtleiters sich außerhalb der Steckbuchse befindet, wenn der Steckverbinder in die Steckbuchse eingesteckt ist.

Der Lichtleiter kann in Steckrichtung aus dem Grundkörper wenigstens um das vierfache seines Durchmessers hervorstehen.

Insbesondere steht der Lichtleiter des Kombinationskabels unabhängig von seinem Durchmesser in Steckrichtung aus dem Grundkörper wenigstens 10 mm, besonders bevorzugt 30 mm, hervor.

Hierdurch kann unabhängig vom Durchmesser des Lichtleiters eine hohe Wärmebelastung der Steckbuchse, der mit den Kontaktelementen dieser Steckbuchse verbundenen elektrischen Verbindungen und der die Steckbuchse haltenden Gehäusewand durch eine Lichtquelle vermieden werden, deren Licht in den Lichtleiter des Kombinationskabels eingekoppelt wird.

Es erfolgt eine Stützung und Führung des Lichtleiters über die Lichtleiterhalterung des Steckverbinders, die sich dazu in Steckrichtung über den Grundkörper hinaus erstreckt. Dadurch kann der in dem Kanal der Lichtleiterhalterung angeordnete Lichtleiter besonders gut gegen Verformungen, insbesondere Krümmungen geschützt werden. In diesem Fall ist der Buchsenkanal der Steckbuchse so ausgebildet, dass die Lichtleiterhalterung in den Buchsenkanal einführbar ist.

Der sich in Steckrichtung über den Grundkörper hinaus erstreckende Abschnitt der Lichtleiterhalterung weist eine Länge von wenigstens 10 mm, besonders bevorzugt 30 mm auf, um eine hinreichende Versteifung und Stützung eines in den Kanal der Lichtleiterhalterung eingeführten Lichtleiters zu erreichen. Durch eine solche Stützung kann der über den Grundkörper des Steckverbinders hervorstehende Abschnitt des Lichtleiter eines erfindungsgemäßen Kombinationskabels besonders lang ausgebildet sein, um einen hinreichend großen Abstand zwischen einer Lichtquelle und einer den Steckverbinder aufnehmenden Steckbuchse zu ermöglichen. Besonders bevorzugt kann die Lichtleiterhalterung den Lichtleiter mindestens bis zu dessen freiem Ende aufnehmen.

Die Lichtleiterhalterung des Steckverbinders ist zumindest in dem sich in Steckrichtung über den Grundkörper hinaus erstreckenden Abschnitt röhrenförmig ausgebildet, was zum einen aufgrund der Symmetrie das erste Einführen der Lichtleiterhalterung in den Buchsenkanal der Steckbuchse wesentlich erleichtern kann und zum anderen eine kostengünstige Herstellung erlaubt.

Besonders bevorzugt können dabei an dem Steckverbinder und dem Buchsengrundkörper Führungselemente vorgesehen sein, die eine für die Kontaktierung der Kontaktelemente notwendige Zentrierung und azimutale Ausrichtung des Steckverbinders auf die Steckbuchse ermöglichen. Insbesondere kann es sich hierbei um eine Nase an dem Steckverbinder oder in der Steckbuchse und eine entsprechende Ausnehmung in der Steckbuchse bzw. in dem Steckverbinder handeln.

Eine Zentrierung wird auch darüber erreicht, dass der Querschnitt der Lichtleiterhalterung des erfindungsgemäßen Steckverbinders in einem Zentrierabschnitt, der in Steckrichtung gesehen zwischen den Kontaktelementen und dem Ende der Lichtleiterhalterung liegt, nicht rotationssymmetrisch zu einer sich in Steckrichtung erstreckende Achse ausgebildet ist. Der Buchsenkanal der Steckbuchse weist dann einen Abschnitt mit einem Querschnitt auf, dessen Form dem Querschnitt des nicht rotationssymmetrischen Abschnitt der Lichtleiterhalterung entspricht. Die Querschnitte sind dabei derart gewählt, dass ein vollständiges Einführen des in Steckrich- tung über den Grundkörper hervorstehenden Abschnitts der Lichtleiterhalterung in den Buchsenkanal möglich ist. Hierdurch kann nach Einführen der Lichtleiterhalterung in den Buchsenkanal gleichzeitig eine azimutale Ausrichtung der Kontaktelemente aufeinander erfolgen. Eine solche Querschnittsänderung kann darüber hinaus eine weitere mechanische Versteifung mit sich bringen.

Um eine sichere Verankerung des Steckverbinders in einer Steckbuchse zu ermöglichen, weist der Grundkörper des Steckverbinders bevorzugt ein an seinem äußeren Umfang angeordnetes Element für eine Rastverbindung auf, mittels dessen der Steckverbinder in der erfindungsgemäßen Steckbuchse arretierbar ist, die ein entsprechendes Element für die Rastverbindung aufweist. Bei den Rastelementen kann es sich beispielsweise um eine federnde Klinke an dem Steckverbinder und eine entsprechende Ausnehmung in dem Buchsengrundkörper der Steckbuchse handeln. Jedoch kann die Klinke prinzipiell auch in der Buchse angeordnet sein, wobei der Grundkörper des Steckverbinders eine entsprechende Ausnehmung aufweist.

Besonders bevorzugt ist eine den Grundkörper des Steckverbinders umgebende, parallel zur Steckrichtung bewegbare Hülse vorgesehen, mittels derer eine Rastverbindung zu einer Steckbuchse lösbar ist. Dies erlaubt es, auf besonders einfache Art und Weise den Steckverbinder aus einer Steckbuchse zu lösen.

Das Kombinationskabel ist an seinem anderen Ende mit einem Kamerakopf verbunden, der eine mit den elektrischen Leitungen verbundene optoelektronische Kamera mit einer zur Fokussierung verstellbaren Fokussierungseinrichtung und einen in Blickrichtung der Kamera offenen Lichtleiterkanal aufweist, in dem der Lichtleiter zur Beleuchtung wenigstens eines Teils des von der Kamera erfassbaren Sichtbereichs angeordnet ist. Unter dem Sichtbereich wird hierbei der Bereich verstanden, der tatsächlich von der optoelektronischen Kamera abgebildet wird und der sich bei Verwendung entsprechender optischer Einrichtungen daher nicht unmittelbar vor der optoelektronischen Kamera befinden muss. Dementsprechend bedeutet die Angabe, dass der Lichtleiter zur Beleuchtung wenigstens eines Teils des von der Kamera erfassten Sichtbereichs angeordnet ist, auch nicht, dass dieser Bereich unmittelbar beleuchtet werden muss, sondern dass aus dem Lichtleiter austretendes Licht entweder durch einen weiteren Lichtleiter oder durch andere optische Einrichtungen auf den von der optoelektronischen Kamera abzubildenden Bereich gelenkt werden kann.

Ein solches Kombinationskabel mit Kamerakopf ist einfach lösbar mit einer Versorgungs- und Auswerteeinheit zu verbinden. Daher kann das Kombinationskabel mit dem Kamerakopf zur Reinigung und/oder Sterilisation oder zum Austausch gegen ein anderes Kombinationskabel leicht von der Versorgungs- und Auswerteeinheit getrennt werden.

Zur einfachen Fokussierung weist der Kamerakopf bevorzugt einen beweglichen Fokussierring auf, der mit der Fokussierungseinrichtung derart verbunden ist, dass durch Bewegung des Fokussierringes die Fokussierungseinrichtung verstellbar ist. Dies ermöglicht es dem Benutzer eines Kamerakopfes, insbesondere bei Verwendung im Zusammenhang mit einem Endoskopiesystem, gleichzeitig den Kamerakopf zu halten und eine Fokussierung der optoelektronischen Kamera mit nur einem Finger, beispielsweise dem Daumen, vorzunehmen.

Um eine einfache Bedienung der optoelektronischen Kamera oder anderer elektronischer Einrichtungen zu ermöglichen, ist an einem in Blickrichtung der optoelektronischen Kamera vor dieser liegenden Abschnitt des Kamerakopfes eine entsprechende Schalteinrichtung vorgesehen. Insbesondere können die zu dieser Schalteinrichtung führenden elektrischen Leitungen Leitungen des Kombinationskabels sein. Hierdurch ist es möglich, mit nur einer Hand gleichzeitig die optoelektronische Kamera zu führen und zu bestimmten Zeitpunkten von der optoelektronischen Kamera erfasste Bilder durch Betätigung der Schalteinrichtung abzuspeichern und/oder auszudrucken.

Insbesondere in Verbindung mit dem beweglichen Fokussierring ergibt sich somit ein sehr einfach mit nur einer Hand zu bedienender Kamerakopf mit einer optoelektronischen Kamera.

Zur besseren Einkopplung des von der Lichtquelle abgegebenen Lichts ist eine optische Einrichtung zur Fokussierung des von der Lichtquelle abgegebenen Lichts auf das Ende des Lichtleiters vorgesehen. Dabei wird der Abstand von Steckbuchse und Fokussierungseinrichtung der Länge des sich in Steckrichtung über den Grundkörper hinaus erstreckenden Abschnitts des Lichtleiters entsprechend gewählt. Hierdurch kann eine besonders große Lichtausbeute gewährleistet werden.

Das Endoskopiesystem hat grundsätzlich eine optoelektronische Kamera, eine Versorgungs- und Auswertevorrichtung, eine Lichtquelle und ein Kombinationskabel, das einen Lichtleiter zur Beleuchtung wenigstens einen Teil des Sichtbereichs der optoelektronischen Kamera mit Licht der Lichtquelle und elektrische Leitungen zu elektrischen Verbindung der optoelektronischen Kamera mit der Versorgungs- und Auswertevorrichtung umfasst, bei der das Kombinationskabel lösbar mit der Versorgungs- und Auswertevorrichtung verbindbar ist.

Bei einem solchen Endoskopiesystem kann das Kombinationskabel zur Reinigung und/oder Sterilisation leicht abgenommen werden oder bei Beschädigung ausgetauscht werden. Darüber hinaus ist es auch möglich, mit nur einer Versorgungs-und Auswertevorrichtung Kombinationskabel verschiedener Länge zu verwenden.

Eine bevorzugte Ausführungsform der Erfindung wird nun beispielhaft anhand der Zeichnungen beschrieben. Es zeigen:
- Fig. 1: eine schematische, teilweise Darstellung eines Endoskopiesystems nach einer bevorzugten Ausführungsform der Erfindung,
- Fig. 2: eine schematische perspektivische Darstellung eines Abschnitts des Kombinationskabels mit Steckverbinder nach der bevorzugten Ausführungsform der Erfindung,
- Fig. 3: eine teilweise Schnittansicht durch den Steckverbinder in Fig. 2 in einer Steckbuchse nach der bevorzugten Ausführungsform der Erfindung und
- Fig. 4: eine schematische Schnittansicht durch den Kamerakopf in Fig. 1.

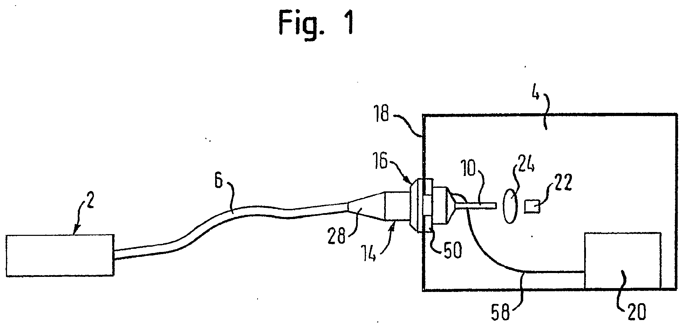

In Fig. 1 weist ein Endoskopiesystem nach einer bevorzugt Ausführungsform der Erfindung einen Kamerakopf 2 mit einer Beleuchtungsanordnung, eine Versorgungs- und Auswertevorrichtung 4 und ein den Kamerakopf 2 mit der Versorgungs- und Auswerteeinrichtung 4 verbindendes Kombinationskabel 6 nach einer beispielhaften Ausführungsform der Erfindung auf.

Das Kombinationskabel 6 dient der Übertragung einer Versorgungsspannung und elektrischer Signale zwischen dem Kamerakopf 2 und der Versorgungs- und Auswertevorrichtung 4 und der Zuführung von Licht von der Versorgungs- und Auswerteeinrichtung 4 an den Kamerakopf 2.

Das Kombinationskabel 6 umfaßt dazu in einem Mantel 8 einen Lichtleiter 10 und mehrere elektrische Leitungen 12. Der Lichtleiter 10 umfaßt dabei, in den Figuren nicht gezeigt, ein Bündel von Lichtleitfasern.

Während der Kamerakopf 2 mit dem Ende des Kombinationskabels 6 fest verbunden ist, ist das Kombinationskabel lösbar mittels eines an seinem anderen Ende angeordneten Steckverbinders 14 über eine Steckbuchse 16 in einer Gehäusewand 18 der Versorgungs- und Auswertevorrichtung 4 mit dieser verbunden.

Die Versorgungs- und Auswertevorrichtung 4 weist zur Versorgung des Kamerakopfs und der Auswertung aufgenommener Bilder eine elektronische Einheit 20 auf, die mit der Steckbuchse 16 verbunden ist. Weiterhin ist eine Lichtquelle 22 vorgesehen, deren Licht über eine Linse 24 fokussierbar ist.

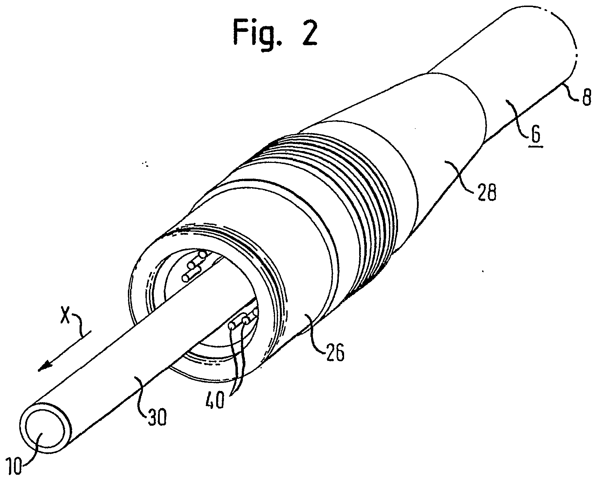

Zur Verbindung des Kombinationskabels 6 mit der Versorgungs- und Auswertevorrichtung 4 dient der Steckverbinder 14 in Verbindung mit der Steckbuchse 16. In Fig. 2 weist der Steckverbinder 14 einen hülsenförmigen Grundkörper 26 mit einem kreisförmigen Querschnitt auf, der mit einem Ende des Kombinationskabels 6 verbunden ist, wobei der Übergang zwischen Grundkörper 26 und Kombinationskabel 6 durch eine Kunststoffmanschette 28 abgedeckt ist.

Koaxial zu dem Grundkörper 26 ist eine Lichtleiterhalterung 30 angeordnet, die sich in Steckrichtung X über den Grundkörper 26 um etwa 65 mm hinaus erstreckt und in einem Kanal 32 den Lichtleiter 10 des Kombinationskabels 6 enthält, der an dem in Steckrichtung X liegenden Ende des Kanals 32 endet.

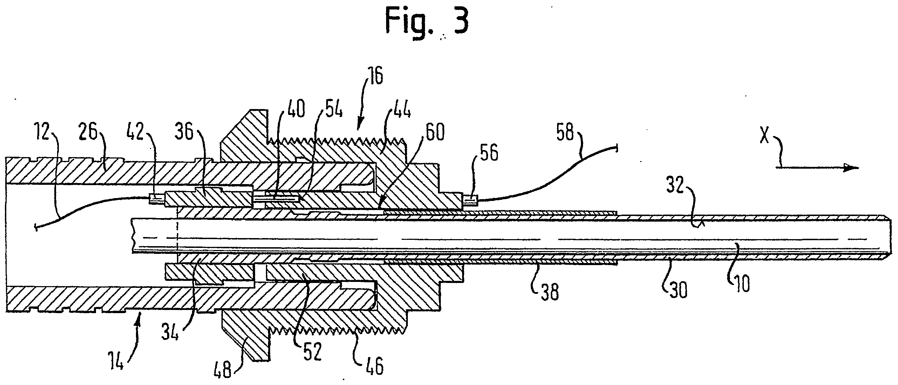

Die Lichtleiterhalterung 30 ist in Figur 3 genauer gezeigt. Sie ist im wesentlichen röhrenförmig mit einer Wandstärke von etwa 0,5 mm ausgebildet und weist einen Befestigungsabschnitt 34 größerer Wandstärke auf, mit dem die Lichtleiterhalterung in einem in dem Grundkörper 26 befestigten Haltering 36 befestigt ist. An ihrem in Steckrichtung X liegenden Ende ist die Lichtleiterhalterung 30 angefast, um ein leichtes Einführen des Steckverbinders in die Steckbuchse 16 zu erlauben.

Die Lichtleiterhalterung 30 weist weiterhin ein Verstärkungsrohr 38 mit einer Länge von etwa 33 mm und einer Wandstärke von ebenfalls etwa 0,5 mm auf, das den den Lichtleiter 10 aufnehmenden Rohrabschnitt der Lichtleiterhalterung 30 umgibt und das sich etwa zu einem Drittel in der Steckbuchse 16 und zu zwei Dritteln über diese hinaus in Steckrichtung X erstreckt, wenn der Steckverbinder 14 in die Steckbuchse 16 gesteckt ist.

Im Inneren des Grundkörpers 26 sind in dem Haltering 36 auf einem zu dem Grundkörper 26 wie auch dem Lichtleiter 10 und der Lichtleiterhalterung 30 koaxialen Kreis sechzehn Kontaktstifte 40 angeordnet (vgl. Fig. 2), die über Steckverbinderanschlüsse, von denen in Fig. 3 nur der Anschluß 42 sichtbar ist, mit elektrischen Leitungen 12 des Kombinationskabels 6 verbunden sind (vgl. Fig. 3).

Die in der Gehäusewand 18 der Versorgungs- und Auswertevorrichtung 4 angeordnete Steckbuchse 16 weist einen Buchsengrundkörper 44 auf, der ein Außengewinde 46 und einen Kragen 48 umfaßt, so daß er in eine Öffnung in der Gehäusewand 18 einschiebbar und, wie in Fig. 1 schematisch dargestellt, mit einer auf das Außengewinde 46 aufgeschraubten Mutter 50 befestigbar ist.

Der Buchsengrundkörper 44 ist topfartig derart ausgebildet, daß der Grundkörper 26 des Steckverbinders 14 in die Topföffnung des Buchsengrundkörpers 44 einsteckbar ist.

Weiterhin ist in dem Buchsengrundkörper 44 ein hohlzylindrischer Abschnitt 52 vorgesehen, dessen Außendurchmesser so gewählt ist, daß die Wand des Grundkörpers 26 des Steckverbinders 14 zwischen die Innenwand des Buchsengrundkörpers 44 und die Außenwand des hohlzylindrischen Abschnitts 52 mit nur wenig Spiel einschiebbar ist.

Der rohrförmige Abschnitt weist weiterhin, in Fig. 3 nur schematisch gezeigt, Bohrungen 54 mit Kontaktfederelementen auf, die mit entsprechenden Buchsenanschlüssen auf der äußeren Seite des Buchsengrundkörpers 44, von denen in Fig. 3 nur der Buchsenanschluß 56 gezeigt ist, leitend verbunden sind. Über die Buchsenanschlüsse und daran beispielsweise angelötete Leitungen, von denen in Fig. 3 nur die Leitung 58 gezeigt ist, sind die Kontaktfederelemente mit der elektronischen Einheit 20 verbunden. Die Bohrungen 54 sind dabei so angeordnet, daß bei Einstecken des Grundkörpers 26 in den Buchsengrundkörper 44 die Kontaktstifte 40 des Steckverbinders in die Bohrungen 54 mit Kontaktfederelementen der Steckbuchse 16 einführbar sind.

Der hohlzylindrische Abschnitt 52 bildet zusammen mit einer entsprechenden Bohrung in dem Buchsengrundkörper 44 einen Buchsenkanal 60, dessen Innendurchmesser dem Außendurchmesser des Befestigungsabschnitts 34 entspricht. Da der Außendurchmesser der Lichtleiterhalterung 30 in dem in Steckrichtung vor dem Befestigungsabschnitt 34 liegenden Bereich geringer als in dem Befestigungsabschnitt 34 ist, wird hierdurch ein leichtes Einführen der Lichtleiterhalterung 30 in den Buchsenkanal 60 ermöglicht. Gleichzeitig ergibt sich durch den Paßsitz zwischen dem Befestigungsabschnitt 34 und dem Buchsenkanal 60 eine präzise Positionierung der Lichtleiterhalterung 30 und damit des darin enthaltenen Lichtleiters 10.

Erfindungsgemäß erstreckt sich die Lichtleiterhalterung 30 mit dem Lichtleiter 10 in Steckrichtung über den Grundkörper 26 hinaus und, setzt sich, wie in Figur 3 gezeigt, auch nach Einführen in die Steckbuchse 16 durch den Buchsenkanal 60 weit in das Innere des Gehäuses der Versorgungs- und Auswerteeinheit 4 fort (vgl. Figur 1). Die Lichtquelle 22 und die fokussierende Linse 24 sind unmittelbar vor dem Ende des Lichtleiters 10 angeordnet, so daß eine genaue Fokussierung des Lichts der Lichtquelle 22 auf das Ende des Lichtleiters 10 durch die präzise Positionierung der Lichtleiterhalterung 30 und damit eine gute Einkopplung des Lichts gewährleistet ist.

Durch diese Anordnung ist ein vergleichsweise großer Abstand der Lichtquelle 22 und der Linse 24 von dem innerhalb des Gehäuses der Versorgungs- und Auswertevorrichtung 4 liegenden Abschnitts der Steckbuchse 16 gewährleistet, so daß weder die Gehäusewand 18, die Steckbuchse 16 noch die Buchsenanschlüsse 56 an der Steckbuchse 16, die im eingebauten Zustand üblicherweise Lötverbindungen aufweisen, der von der Lichtquelle 22 abgegebenen Wärme ausgesetzt sind. Im Beispiel beträgt dazu die Länge des sich in Steckrichtung über den Grundkörper 26 hinaus erstreckenden Abschnitts der Lichtleiterhalterung 30 etwa 65 mm.

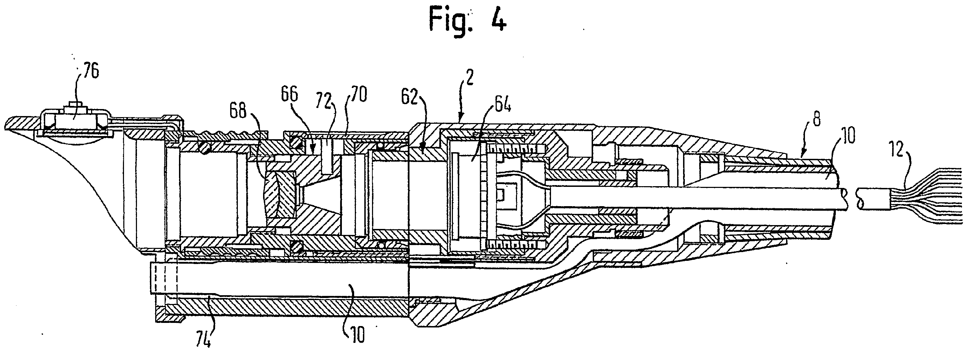

Der Kamerakopf ist genauer in Figur 4 gezeigt. Er weist eine CCD-Kamera 62 auf, die einen CCD-Sensor 64, der mit den elektrischen Leitungen 12 verbunden ist, und eine nur schematisch gezeigte Fokussierungseinrichtung 66 mit einem Linsensystem 68 auf, mit dem in den Kamerakopf eintretendes Licht auf den CCD-Sensor 64 fokussierbar ist. Von dem CCD-Sensor 64 erzeugte Bildsignale werden zur Auswertung an die Versorgungs- und Auswerteeinrichtung 4 übertragen.

An dem Kamerakopf 2 ist ein Fokussierring 70 angeordnet, der um die optische Achse der CCD-Kamera 62 drehbar ist. Über einen Stift 72 ist die Bewegung des Fokussierrings 70 auf die Fokussierungseinrichtung 66 übertragbar, so daß durch Bewegung allein des Fokussierrings 70 ein mit der CCD-Kamera 62 erfaßtes Bild mit einem Finger leicht scharf einstellbar ist.

An dem Kamerakopf ist weiterhin ein sich in Blickrichtung der CCD-Kamera 62 öffnender Lichtleiterkanal 74 vorgesehen, in den der Lichtleiter 10 des Kombinationskabels 6 führt. Der Lichtleiterkanal 74 ist somit derart angeordnet, daß mit über den Lichtleiter 10 übertragenes Licht wenigstens ein Teil des Sichtbereichs der CCD-Kamera 62 beleuchtbar ist.

Auf der Oberseite des Kamerakopfes ist, mit zwei der elektrischen Leitungen 12 verbunden, ein Tastschalter 76 vorgesehen, mit dem die Speicherung eines von der CCD-Kamera 62 aufgenommenen und an die Versorgungs- und Auswerteeinheit 4 übertragenen Bildes in der elektronischen Einheit 20 auslösbar ist.

Der Kamerakopf 6 mit der CCD-Kamera 62, mit der Beleuchtung durch den Lichtleiter 10, dem Fokussierring 70 und dem Tastschalter 76 gestattet eine einfache Handhabung der Kamera mit einer Hand.

### Bezugszeichenliste

- 2: Kamerakopf
- 4: Versorgungs- und Auswerteeinheit
- 6: Kombinationskabel
- 8: Mantel
- 10: Lichtleiter
- 12: elektrische Leitungen
- 14: Steckverbinder
- 16: Steckbuchse
- 18: Gehäusewand
- 20: elektronische Einheit
- 22: Lichtquelle
- 24: Linse
- 26: Grundkörper
- 28: Manschette
- 30: Lichtleiterhalterung
- 32: Kanal
- 34: Befestigungsabschnitt
- 36: Haltering
- 38: Verstärkungsrohr
- 40: Kontaktstifte
- 42: Steckverbinderanschluß
- 44: Buchsengrundkörper
- 46: Außengewinde
- 48: Kragen
- 50: Mutter
- 52: hohlzylindrischer Abschnitt
- 54: Bohrungen mit Kontaktfederelementen
- 56: Buchsenanschluß
- 58: Leitung
- 60: Buchsenkanal
- 62: CCD-Kamera
- 64: CCD-Sensor
- 66: Fokussierungseinrichtung
- 68: Linsensystem
- 70: Fokussierring
- 72: Stift
- 74: Lichtleiterkanal
- 76: Tastschalter

## Patentansprüche

1. Endoskopiesystem
- mit einer optoelektronischen Kamera (62),
- einer Versorgungs- und Auswertevorrichtung (4) mit einer Lichtquelle (22) und
- einem Kombinationskabel (6), das mindestens einen Lichtleiter (10) zur Beleuchtung wenigstens eines Teils des Sichtbereichs der optoelektronischen Kamera (62) mit Licht der Lichtquelle (22) und elektrische Leitungen (12) zur elektrischen Verbindung der optoelektronischen Kamera (62) mit der Versorgungs- und Auswertevorrichtung (4) aufweist, sowie
- mit einem Steckverbinder (14) und mit einer Steckbuchse (16),
wobei
- der Steckverbinder (14) eine Lichtleiterhalterung (30) mit einem beidseitig offenen Kanal (32) zur Aufnahme des Lichtleiters (10) aufweist,
- wenigstens zwei Kontaktelemente (40) mit jeweils einer der elektrischen Leitungen (12) verbunden sind und
- die Kontaktelemente (40) an dem Steckverbinder (14) auf zumindest einem koaxial zu der Lichtleiterhalterung (30) verlaufenden Kreis angeordnet sind,
- wobei weiterhin sich die Lichtleiterhalterung (30) mit einem röhrenförmigen Abschnitt in Steckrichtung derart über einen Grundkörper (26) des Steckerverbinders hinaus erstreckt, dass das Ende des aus dem Grundkörper (26) hervorstehenden Abschnitts der Lichtleiterhalterung (30) sich außerhalb der Steckbuchse (16) befindet, wenn der Steckerverbinder (14) in die Steckbuchse (16) eingesteckt ist,
**dadurch gekennzeichnet,**
**dass** der Steckerverbinder mit dem Grundkörper (26) in die Steckbuchse (16) einführbar ist und mittels desselben in der Steckbuchse (16) haltbar,
**dass** an einem Buchsengrundkörper (44) ein hohlzylindrischer Abschnitt (52) vorgesehen ist, zwischen dessen Außenwand und der Innenwand des Buchsengrundgrundkörpers (44) die Wand des Grundkörpers (26) des Steckerverbinders einschiebbar ist,
**dass** eine Zentrierung für die Kontaktierung der Kontaktelemente dadurch gebildet ist, dass der Querschnitt der Lichtleiterhalterung (30) in einem Zentrierabschnitt, der in Steckrichtung betrachtet zwischen den Kontaktelementen (40) und dem Ende der Lichtleiterhalterung (30) liegt, nicht rotationssymmetrisch zu einer sich in Steckrichtung erstreckenden Achse ausgebildet ist, und
**dass** der sich in Steckrichtung über den Grundkörper (26) hinaus erstreckende Abschnitt der Lichtleiterhalterung (30) eine Länge von wenigstens 10 mm, insbesondere von wenigstens 30 mm, aufweist, so dass der Lichtleiter (10) in einem Kanal (32) der Lichtleiterhaltung (30) unmittelbar vor einer Linse (24) oder einer Lichtquelle (22) endet,
wobei die Lichtleiterhalterung (30) an ihrem in Steckrichtung (X) liegenden freien Ende eine Anfasung aufweist.

2. System nach Anspruch 1, **dadurch gekennzeichnet, dass** der Lichtleiter (10) in Steckrichtung aus dem Grundkörper (26) wenigstens um das Vierfache seines Durchmessers hervorsteht.

3. System nach einem der Ansprüche 1 oder 2, **dadurch gekennzeichnet, dass** die Lichtleiterhalterung rohrförmig mit einer Wandstärke von 0,5 mm ausgebildet ist und einen Befestigungsabschnitt (34) größerer Wandstärke aufweist, mit dem die Lichtleiterhalterung in einem in dem Grundkörper (26) befestigten Haltering (36) befestigt ist.

4. System nach einem der Ansprüche 1 bis 3, **dadurch gekennzeichnet, dass** die Lichtleiterhalterung (30) ein Verstärkungsrohr (38) mit einer Länge von etwa 33 mm und einer Wandstärke von etwa 0,5 mm aufweist, das den den Lichtleiter (10) aufnehmenden Rohrabschnitt (32) der Lichtleiterhalterung (30) umgibt und sich etwa zu einem Drittel in der Steckbuchse (16) und zu zwei Dritteln über diese hinaus in Steckrichtung (X) erstreckt, wenn der Steckverbinder (14) in die Steckbuchse (16) gesteckt ist.

5. System nach einem der Ansprüche 1 bis 4, **dadurch gekennzeichnet, dass** der Übergang zwischen dem Grundkörper (26) und dem Kombinationskabel (6) durch eine Kunststoffmanschette (28) abgedeckt ist.

6. System nach einem der Ansprüche 1 bis 5, **dadurch gekennzeichnet, dass** ein Buchsengrundkörper (44) ein Außengewinde (46) und einen Kragen (48) umfasst.

7. System nach Anspruch 6, **dadurch gekennzeichnet, dass** der Außendurchmesser des hohlzylindrischen Abschnitts (52) derart ist, dass die Wand des Grundkörpers (26) des Steckverbinders (14) zwischen die Innenwandung des Buchsengrundkörpers (44) und die Außenwand des hohlzylindrischen Abschnitts (52) mit nur wenig Spiel einschiebbar ist.

8. System nach einem der Ansprüche 1 bis 7, **dadurch gekennzeichnet, dass** der hohlzylindrische Abschnitt (52) zusammen mit einer entsprechenden Bohrung in dem Buchsengrundkörper (44) einen Buchsenkanal (60) bildet, dessen Innendurchmesser dem Außendurchmesser des Befestigungsabschnitts (34) der Lichtleiterhalterung (30) entspricht.

9. System nach Anspruch 8, **dadurch gekennzeichnet, dass** der Außendurchmesser der Lichtleiterhalterung (30) in dem in Steckrichtung vor dem Befestigungsabschnitt (34) liegenden Bereich geringer als in dem Befestigungsabschnitt (34) ist.

10. System nach Anspruch 8 oder 9, **dadurch gekennzeichnet, dass** zwischen dem Befestigungsabschnitt (34) und dem Buchsenkanal ein Passsitz zur präzisen Positionierung der Lichtleiterhalterung (30) ausgebildet ist.

11. System nach einem der Ansprüche 1 bis 10, **dadurch gekennzeichnet, dass** der hohlzylindrische Abschnitt (52) der Steckbuchse (16) Bohrungen (54) mit Kontaktfederelementen aufweist.

12. System nach Anspruch 11, **dadurch gekennzeichnet, dass** die Kontaktfederelemente mit Buchsenanschlüssen zur äußeren Seite des Buchsengrundkörpers (44) leitend verbunden sind.

13. System nach Anspruch 11 oder 12, **dadurch gekennzeichnet, dass** die Bohrungen (54) so angeordnet sind, dass bei Einstecken des Grundkörpers (26) des Steckverbinders (14) in den Buchsengrundkörper (44) Kontaktelemente (40) des Steckverbinders (14) in die Bohrungen (54) mit Kontaktfederelementen der Steckbuchse (16) einführbar sind.

14. System nach einem der vorangehenden Ansprüche, **dadurch gekennzeichnet, dass** eine federnde Klinke am Steckverbinder (14) bzw. an der Steckbuchse (16) und eine entsprechende Ausnehmung an der Buchse (16) bzw. am Steckverbinder (14) ausgebildet ist.

15. System nach Anspruch 14, **gekennzeichnet durch** eine den Grundkörper (26) des Steckverbinders (14) umgebende, parallel zur Steckrichtung (X) bewegbare Hülse, mittels derer eine Rastverbindung zu der Steckbuchse (16) lösbar ist.

## Claims

1. Endoscopy system
- comprising an optoelectronic camera (62),
- a supply and evaluation apparatus (4) having a light source (22), and
- a combination cable (6) which has at least one light guide (10) for illuminating at least one portion of the visible region of the optoelectronic camera (62) with light from the light source (22) and has electrical lines (12) for electrically connecting the optoelectronic camera (62) to the supply and evaluation apparatus (4), and also
- comprising a plug connector (14) and comprising a plug socket (16),
wherein
- the plug connector (14) has a light guide mount (30) comprising a channel (32), which is open at both ends, for receiving the light guide (10),
- at least two contact elements (40) are connected to in each case one of the electrical lines (12), and
- the contact elements (40) are arranged on the plug connector (14) in at least one circle which runs coaxially in relation to the light guide mount (30),
- wherein, furthermore, the light guide mount (30), by way of a tubular section, extends in the plugging direction beyond a main body (26) of the plug connector in such a way that the end of that section of the light guide mount (30) which projects out of the main body (26) is located outside the plug socket (16) when the plug connector (14) is plugged into the plug socket (16),
**characterized**
**in that** the plug connector, by way of the main body (26), can be inserted into the plug socket (16) and can be held in the plug socket (16) by means of the said main body,
**in that** a hollow-cylindrical section (52) is provided on a socket main body (44), it being possible for the wall of the main body (26) of the plug connector to be pushed between the outer wall of the said hollow-cylindrical section and the inner wall of the socket base main body (44),
**in that** centring for the contact-making operation by the contact elements is formed by the cross section of the light guide mount (30) being formed in a centring section, which is situated between the contact elements (40) and the end of the light guide mount (30) as viewed in the plugging direction, without rotational symmetry in relation to an axis which extends in the plugging direction, and
**in that** that section of the light guide mount (30) which extends beyond the main body (26) in the plugging direction has a length of at least 10 mm, in particular of at least 30 mm, so that the light guide (10) ends immediately in front of a lens (24) or a light source (22) in a channel (32) of the light guide mount (30), wherein the light guide mount (30) has a chamfer at its free end in the plugging direction (X).

2. System according to Claim 1, **characterized in that** the light guide (10) projects out of the main body (26) at least by four times its diameter in the plugging direction.

3. System according to either of Claims 1 and 2, **characterized in that** the light guide mount is of tubular design with a wall thickness of 0.5 mm and has a fastening section (34) of greater wall thickness, by way of which fastening section the light guide mount is fastened in a retaining ring (36) which is fastened in the main body (26).

4. System according to one of Claims 1 to 3, **characterized in that** the light guide mount (30) has a reinforcing tube (38) with a length of approximately 33 mm and a wall thickness of approximately 0.5 mm, which reinforcing tube surrounds the tube section (32), which receives the light guide (10), of the light guide mount (30) and extends by approximately one third into the plug socket (16) and by two thirds beyond the said plug socket in the plugging direction (X) when the plug connector (14) is plugged into the plug socket (16).

5. System according to one of Claims 1 to 4, **characterized in that** the transition between the main body (26) and the combination cable (6) is covered by a plastic cuff (28).

6. System according to one of Claims 1 to 5, **characterized in that** a socket main body (44) comprises an external thread (46) and a collar (48).

7. System according to Claim 6, **characterized in that** the outside diameter of the hollow-cylindrical section (52) is such that the wall of the main body (26) of the plug connector (14) can be pushed between the inner wall of the socket main body (44) and the outer wall of the hollow-cylindrical section (52) with only little play.

8. System according to one of Claims 1 to 7, **characterized in that** the hollow-cylindrical section (52), together with a corresponding bore in the socket main body (44), forms a socket channel (60), the inside diameter of the said socket channel corresponding to the outside diameter of the fastening section (34) of the light guide mount (30).

9. System according to Claim 8, **characterized in that** the outside diameter of the light guide mount (30) **in that** region which is situated in front of the fastening section (34) in the plugging direction is smaller than in the fastening section (34).

10. System according to Claim 8 or 9, **characterized in that** a snug fit is formed between the fastening section (34) and the socket channel for the purpose of precise positioning of the light guide mount (30).

11. System according to one of Claims 1 to 10, **characterized in that** the hollow-cylindrical section (52) of the plug socket (16) has bores (54) with contact spring elements.

12. System according to Claim 11, **characterized in that** the contact spring elements are conductively connected to socket connections on the outside of the socket main body (44).

13. System according to Claim 11 or 12, **characterized in that** the bores (54) are arranged such that, when the main body (26) of the plug connector (14) is plugged into the socket main body (44), contact elements (40) of the plug connector (14) can be inserted into the bores (54) with contact spring elements of the plug socket (16).

14. System according to one of the preceding claims, **characterized in that** a spring-action catch is formed on the plug connector (14) or on the plug socket (16), and a corresponding recess is formed on the socket (16) or on the plug connector (14).

15. System according to Claim 14, **characterized by** a sleeve which surrounds the main body (26) of the plug connector (14), can move parallel to the plugging direction (X) and by means of which a latching connection to the plug socket (16) can be released.

## Revendications

1. Système endoscopique :
- avec une caméra optoélectronique (62) ;
- un dispositif d'alimentation et d'analyse (4) avec une source lumineuse (22) ; et
- un câble combiné (6), comportant au moins un conducteur de lumière (10) pour l'éclairage d'au moins une partie de la zone visible de la caméra optoélectronique (62) avec la lumière de la source lumineuse (22) et des câbles électriques (12) pour la connexion électrique de la caméra optoélectronique (62) avec le dispositif d'alimentation et d'analyse (4) ; ainsi que
- avec un connecteur enfichable (14) et avec un connecteur femelle (16) ;
- le connecteur enfichable (14) comportant une fixation de conducteur de lumière (30) avec un canal (32) ouvert des deux côtés pour recevoir le conducteur de lumière (10) ;
au moins deux éléments de contact (40) avec respectivement un des câbles électriques (12) relié ; et
les éléments de contact (40) étant disposés au niveau du connecteur enfichable (14) sur au moins un circuit s'étendant dans le plan coaxial par rapport à la fixation de conducteur de lumière (30) ;
la fixation de conducteur de lumière (30) avec une section en forme de tube s'étendant en outre dans la direction d'enfichage de telle sorte au-delà d'un corps de base (26) du connecteur enfichable que l'extrémité de la section, saillant hors du corps de base (26), de la fixation de conducteur de lumière (30) se trouve à l'extérieur du connecteur femelle (16) lorsque le connecteur enfichable (14) est enfiché dans le connecteur femelle (16) ;
**caractérisé en ce que** :
le connecteur enfichable peut être introduit avec le corps de base (26) dans le connecteur femelle (16) et peut être maintenu dans le connecteur femelle (16) à l'aide de celui-ci ;
une section (52) cylindrique creuse étant prévue au niveau d'un corps de base de connecteur femelle (44), entre la paroi extérieure duquel et la paroi intérieure du corps de base de connecteur femelle (44) la paroi du corps de base (26) du connecteur enfichable peut être enfoncée ; que
un centrage pour la mise en contact des éléments de contact est réalisé pour que la section transversale de la fixation de conducteur de lumière (30) soit réalisée dans une section de centrage reposant dans la direction d'enfichage considérée entre les éléments de contact (40) et l'extrémité de la fixation de conducteur de lumière (30), non symétriquement en rotation par rapport à un axe un axe s'étendant dans la direction d'enfichage ; et que la section de la fixation de conducteur de lumière (30) s'étendant dans la direction d'enfichage au-delà du corps de base (26) comporte une longueur d'au moins 10 mm, notamment d'au moins 30 mm, de sorte que le conducteur de lumière (10) prenne fin dans un canal (32) de la fixation de conducteur de lumière (30) directement avant une lentille (24) ou une source lumineuse (22) ;
la fixation de conducteur de lumière (30) comportant un chanfrein au niveau de son extrémité libre reposant dans la direction d'enfichage (X).

2. Système selon la revendication 1, **caractérisé en ce que** le conducteur de lumière (10) ressort, dans la direction d'enfichage, hors du corps de base (26) au moins de quatre fois son diamètre.

3. Système selon l'une quelconque des revendications 1 ou 2, **caractérisé en ce que** la fixation de conducteur de lumière est réalisée en forme de tube avec une épaisseur de paroi de 0,5 mm et comporte une section de fixation (34) de plus grande épaisseur de paroi avec laquelle la fixation de conducteur de lumière est fixée dans une bague de retenue (36) fixée dans le corps de base (26).

4. Système selon l'une quelconque des revendications 1 à 3, **caractérisé en ce que** la fixation de conducteur de lumière (30) comporte un tube de renforcement (38) avec une longueur d'approximativement 33 mm et une épaisseur de paroi d'approximativement 0,5 mm entourant la section de tube (32) de la fixation de conducteur de lumière (30) logeant le conducteur de lumière (10) et s'étendant approximativement sur un tiers dans le connecteur femelle (16) et sur deux tiers au-delà de celui-ci dans la direction d'enfichage (X) lorsque le connecteur enfichable (14) est enfiché dans le connecteur femelle (16).

5. Système selon l'une quelconque des revendications 1 à 4, **caractérisé en ce que** la transition entre le corps de base (26) et le câble combiné (6) est recouverte par un manchon en plastique (28).

6. Système selon l'une quelconque des revendications 1 à 5, **caractérisé en ce qu'**un corps de base de connecteur femelle (44) comprend un filet extérieur (46) et un col (48).

7. Système selon la revendication 6, **caractérisé en ce que** le diamètre extérieur de la section (52) cylindrique creuse est tel que la paroi du corps de base (26) du connecteur enfichable (14) entre la paroi intérieure du corps de base de connecteur femelle (44) et la paroi extérieure de la section (52) cylindrique creuse peut être enfoncée avec un jeu réduit.

8. Système selon l'une quelconque des revendications 1 à 7, **caractérisé en ce que** la section (52) cylindrique creuse forme, conjointement avec un alésage correspondant réalisé dans le corps de base de connecteur femelle (44), un canal de connecteur femelle (60) dont le diamètre intérieur correspond au diamètre extérieur de la section de fixation (34) de la fixation de conducteur de lumière (30).

9. Système selon la revendication 8, **caractérisé en ce que** le diamètre extérieur de la fixation de conducteur de lumière (30) est plus réduit dans la zone reposant, dans la direction d'enfichage, avant la section de fixation (34) que dans la section de fixation (34).

10. Système selon la revendication 8 ou 9, **caractérisé en ce qu'**un siège ajusté est réalisé entre la section de fixation (34) et le canal de connecteur femelle pour le positionnement précis de la fixation de conducteur de lumière (30).

11. Système selon l'une quelconque des revendications 1 à 10, **caractérisé en ce que** la section (52) cylindrique creuse du connecteur femelle (16) comporte des alésages (54) avec des éléments de contact à ressort.

12. Système selon la revendication 11, **caractérisé en ce que** les éléments de contact à ressort sont reliés de façon conductrice à des raccords de connecteur femelle conduisant au côté extérieur du corps de base de connecteur femelle (44).

13. Système selon la revendication 11 ou 12, **caractérisé en ce que** les alésages (54) sont disposés de telle sorte que des éléments de contact (40) du connecteur enfichable (14) peuvent être introduits dans les alésages (54) avec des éléments de contact à ressort du connecteur femelle (16) lors de l'enfichage du corps de base (26) du connecteur enfichable (14) dans le corps de base de connecteur femelle (44).

14. Système selon l'une quelconque des revendications précédentes, **caractérisé en ce qu'**un cliquet à ressort est réalisé au niveau du connecteur enfichable (14) et/ou au niveau du connecteur femelle (16) et qu'un évidement correspondant est réalisé au niveau du connecteur femelle (16) et/ou au niveau du connecteur enfichable (14).

15. Système selon la revendication 14, **caractérisé par** un connecteur femelle entourant le corps de base (26) du connecteur enfichable (14), mobile parallèlement à la direction d'enfichage (X) à l'aide duquel une liaison de blocage peut être libérée par rapport au connecteur femelle (16).
